# EUROPEAN PATENT SPECIFICATION

(11) **EP 0 748 016 B1**
(45) Date of publication and mention of the grant of the patent: **20.09.2000**
(21) Application number: 96108431.6
(22) Date of filing: 28.05.1996
(51) Int. Cl.: H02B 1/40, H02B 11/26

(54) **Electric power supply switch box, particularly for household use**
Schaltkasten für elektrische Stromversorgung, besonders für Haushaltsgebrauch
Armoire de commutation pour alimentation en courant électrique, particulièrement pour les foyers

(30) Priority: 08.06.1995 IT MI951221
(43) Date of publication of application: 11.12.1996
(73) Proprietor: GEWISS S.p.A., I-24069 Cenate Sotto (Bergamo) (IT)
(72) Inventor: Bosatelli, Domenico, 24069 Cenate Sotto (Prov. of Bergamo) (IT)
(74) Representative: Modiano, Guido, Dr.-Ing.

(56) References cited:
- EP-A- 0 345 851
- GB-A- 2 071 915
- US-A- 4 769 557

## Description

The present invention relates to an electric power supply master box, particularly for household use.

The use of master boxes for the supply of electric power in houses and apartments is well-known. These master boxes are usually provided with magnetothermal circuit breakers that interrupt the supply of electric power in case of overvoltages on the power supply line.

Magnetothermal circuit breakers and other functional devices, such as residual current circuit breakers, are usually provided as modules, for example of the DIN 43880 type. These modules are installed on a rail that is fixed to the wall, for example of the DIN EN 50022 type, which is commonly termed C-rail.

A drawback of conventional master boxes is that they give the user no indication as to the state of the supply of electric power.

Another drawback is that C-rails have a limited number of spaces for the modules to be installed, and if the user wants more functional modules he must often use an additional C-rail, affecting the space occupation and the aesthetics of the master box.

EP-0 345 851 discloses a master box as defined in the preamble of independent claim 1.

Therefore, the aim of the present invention is to provide an electric power supply master box, particularly for household use, that does not require free spaces on the C-rail or additional C-rails for accommodating functional modules.

Within the scope of this aim, an object of the present invention is to provide an electric power supply master box, particularly for household use, which is capable of giving the user an indication as to the state of the supply of electric power.

Another object of the present invention is to provide an electric power supply master box, particularly for household use, that is highly reliable, relatively easy to produce, and at competitive costs.

This aim, these objects, and others which will become apparent hereinafter are achieved by an electric power supply master box, particularly for household use, as defined in appended claim 1.

The advantages of the invention will become apparent from the description of a preferred but not exclusive embodiment, illustrated only by way of non-limitative example in the accompanying drawings, wherein:
figure 1 is an electrical block diagram of the control module of the master box according to the present invention;
figure 2 is a perspective view of the master box according to the present invention, with the control module shown in exploded view;
figure 3 is an enlarged-scale view of a portion of figure 2, related to the control module.

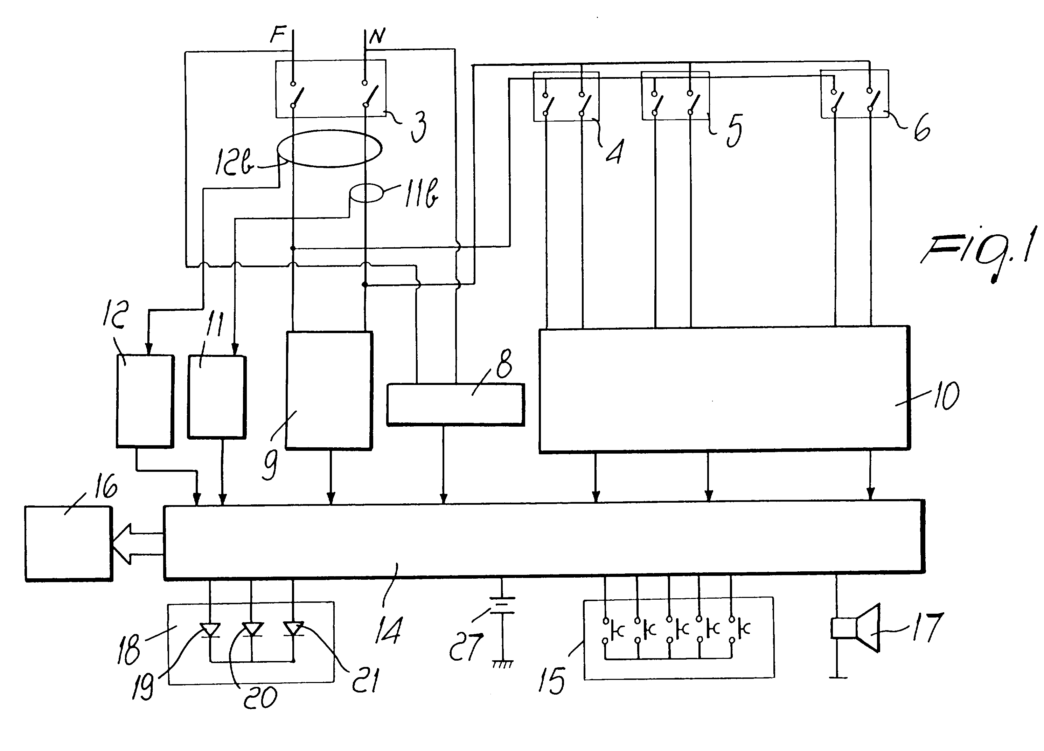

With reference to figure 1, two power supply lines, a phase line F and a neutral line N, are connected to a residual current circuit breaker 3 that is adapted to interrupt the supply of electric power if there is a leakage of current to the ground.

The residual current circuit breaker 3 is connected, by means of the phase line (F) and the neutral line (N), to a plurality of magnetothermal circuit breakers.

In the illustrated example, there is a first 16-amp magnetothermal circuit breaker 4, a second 16-amp magnetothermal circuit breaker 5, and a third 10-amp magnetothermal circuit breaker 6. The magnetothermal circuit breakers 4-6 are adapted to "trip" and interrupt the supply of electric power if the value of the current in each one of them exceeds the preset value.

The master box comprises a control module that is constituted by a plurality of functional blocks, each of which has a preset function.

The first functional block 8 is a device for measuring mains voltage that is connected to the phase and neutral lines and is adapted to detect the presence or lack of mains voltage and to measure its value.

The second functional block 9 is a residual current protection intervention block. Said block is connected to the phase line F downstream of the residual current circuit breaker 3 and is adapted to detect the intervention of the residual current circuit breaker 3.

The third functional block 10 is a magnetothermal protection intervention block that is connected to the phase lines F downstream of the magnetothermal circuit breakers 4-6 and is adapted to detect the intervention of said circuit breakers.

The fourth functional block 11 is a device for measuring absorbed currents. It is connected to a current detector 11b that is constituted by an appropriate sensor arranged on the line N downstream of the residual current circuit breaker 3. Said sensor 11b is constituted for example by a toroid.

The fifth functional block 12 is a residual current measurement device. It is connected to a current detector 12b that is constituted by an appropriate sensor arranged on the lines F and N downstream of the residual current circuit breaker 3. Said sensor 12b is constituted for example by a toroid.

All the functional blocks are connected to a control unit 14, which is advantageously constituted by a microcontroller.

A user interface 15 is connected to the control unit 14 and is advantageously constituted by buttons.

Indicator means are also connected to the control unit 14. Said indicator means comprise a plurality of indicator LEDs, generally designated by the reference numeral 18, a liquid crystal display (LCD) 16, and a buzzer 17.

The plurality of LEDs 18 is constituted by the LEDs 19, 20, and 21.

The indicator means are capable of giving the user an indication of the state of the supply of electric power.

More specifically, the display 16 is capable of indicating the normal operating parameters of the system (for example, mains voltage, absorbed current, absorbed power, residual current, etcetera) and the minimum and maximum values of these parameters, stored over a period that is preset during programming. The display 16 also displays all the messages related to the operating states or anomalies of the master box and shows whether there has been an overcurrent in the magnetothermal circuit breakers 4, 5, and 6 respectively.

The LED 19 indicates the lack of voltage on the part of the electric power provider upstream of the residual current circuit breaker 3.

The LED 20 is adapted to indicate whether there is a leakage of current to the ground.

The LED 21 indicates an overcurrent in the magnetothermal circuit breakers 4, 5, and 6 respectively.

A buzzer 17 provides an acoustic indication of the anomalies that have occurred.

Furthermore, a backup battery 27 is connected to the control unit 14 to power the circuit when the electric power provider fails to supply power.

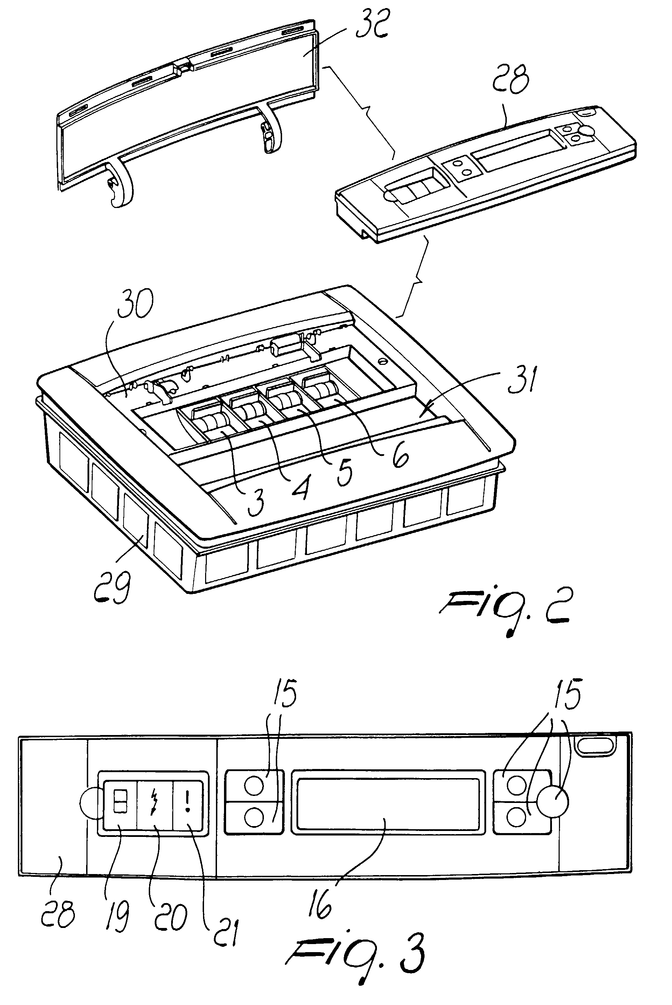

The circuit of figure 1, except for the magnetothermal circuit breakers 4-6 and the residual current circuit breaker 3, is accommodated in a control module 28 that is shown in figure 2.

The master box is composed of a casing 29 which contains a C-rail, advantageously of the DIN EN 50022 type. The box has a front panel 30 with a seat 31 for supporting the control module 28. Furthermore, the electrical components of the master box, in this case the magnetothermal circuit breakers 4-6 and the residual current circuit breaker 3, are located on the front panel 30.

The figure shows the levers of said circuit breakers. The modules and the respective levers can be covered by a flap 32 that is articulated on the front panel 30 of the casing 29.

The control module 28 is accommodated in the seat 31, which is adjacent, separated, and spaced with respect to the portion of the casing that accommodates the electrical components, so that it is visible even when the flap 32 is in closed position.

The operation of the master box according to the present invention is as follows.

The residual current circuit breaker 3 compares the values of the currents that are present in the phase line F and in the neutral line N, and if there is a difference between them, the circuit breaker 3 opens, since there is a leakage of current to the ground or a loss of insulation. If this occurs, the residual current protection intervention block 9 notifies the control unit 14 of the event that has occurred, and said control unit lights up the LED 20. The residual current circuit breaker is set to a leakage current value of 30 mA.

If the electric power provider fails to supply electric power, this event is detected by the voltage measurement device 8, which sends a signal to the control unit 14, which lights up the appropriately provided indicator LED 19. During the power outage, the control unit is powered by the backup battery 27.

If a current absorption higher than the set kW threshold (for example 3 kW) occurs, the current measurement device 11, by means of the sensor 11b, detects this event and sends an alarm signal to the control unit 14. The control unit then indicates this situation on the display 1 and activates the buzzer 17, so that the user anticipates the intervention of the load limiter, avoiding service interruptions. The master box is furthermore provided with alarm thresholds that can be adjusted by means of a button of the user interface 15, with visualization on the display 16.

If there is an overcurrent in one of the magnetothermal circuit breakers 4-6, said circuit breakers open and this event is detected by the magnetothermal protection intervention block 10, which reports the event to the control unit 14, which lights up the LED 21.

It should be noted that the control unit 14, by virtue of software programming, indicates on the display 16, for each type of failure, the event that has occurred and the corrective action.

Furthermore, the voltage measurement device 8 and the absorbed current measurement device 11 can continuously provide the voltage and current values to the control unit 14, which shows them on the display 16.

The visualization of the various values and parameters and the programming of the master box occur by means of the user interface 15.

From what has ben described, it is evident that the present invention fully achieves the intended aim and objects.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric power supply master box, particularly for household use, which comprises a casing (29) that contains at least one C-rail, said casing accommodating modules of electric components (3-6) of said master box, said casing comprising a front panel (30) having a seat (31) for accommodating a control module (28) that is adapted to monitor the functions of said master box, said seat (31) being separate and spaced from the region for accommodating said modules (3-6), characterized in that said control module (28) comprises an absorbed current measurement device (11) that is connected to a current sensor (11b) that is placed on the neutral line downstream of a residual current circuit breaker (3) and is adapted to send the values of said absorbed currents to a microcontroller (14).

2. The master box according to claim 1, characterized in that a flap (32) is articulated on said front panel (30) of the casing to cover, in a closed position, said modules of electric components, said control module (28) being externally visible when said flap (32) is in the closed position.

3. The master box according to claim 1, characterized in that said electrical components (3-6) are circuit breakers.

4. The master box according to claim 3, characterized in that said circuit breakers (3-6) are residual current circuit breakers (3).

5. The master box according to claim 3, characterized in that said circuit breakers (3-6) are magnetothermal circuit breakers (4-6).

6. The master box according to claim 3, characterized in that said circuit breakers (3-6) are circuit breakers for connection to the power supply mains of the electric power provider.

7. The master box according to claim 5, characterized in that said control module (28) comprises a magnetothermal protection intervention block (10) that is connected to the phase lines (F) downstream of said magnetothermal circuit breakers (4-6) and is adapted to notify a microcontroller (14) that said magnetothermal circuit breakers have intervened.

8. The master box according to claim 4, characterized in that said control module (28) comprises a residual current protection intervention block (9) that is connected to the phase line (F) downstream of said residual current circuit breaker (3) and is adapted to notify a microcontroller (14) that said residual current circuit breaker has intervened.

9. The master box according to claim 1, characterized in that said control module (28) comprises a mains voltage measurement device (8) that is adapted to send the value of the mains voltage to the microcontroller (14).

10. The master box according to one or more of the preceding claims, characterized in that said microcontroller (14) drives a LED (20) that is adapted to indicate the intervention of said circuit breakers.

11. The master box according to one or more of the preceding claims, characterized in that said microcontroller (14) drives a LED (19) that is adapted to indicate the lack of power supply on the part of the electric power provider.

12. The master box according to claim 1, characterized in that said microcontroller (14) drives a LED (21) that is adapted to indicate abnormal situations such as power absorption in excess of a preset value.

13. The master box according to claim 12, characterized in that it comprises a buzzer (17) for the acoustic indication of said abnormal situations, said buzzer being driven by said microcontroller (14).

14. The master box according to claim 1, characterized in that said microcontroller (14) drives a liquid-crystal display (16) that is adapted to display the various parameters related to the operation of the master box.

15. The master box according to claim 14, characterized in that said display (16) displays the corrective action that the user must perform.

16. The master box according to claim 1, characterized in that said microcontroller (14) is powered by a backup battery (27) if power from the electric power provider fails.

17. The master box according to claim 14, characterized in that said microcontroller (14) is connected to a user interface (15), to set threshold values for each parameter, to select the information presented on the display and to react to alarm and abnormal situations.

## Patentansprüche

1. Schaltkasten für elektrische Stromversorgung, insbesondere für Haushaltsgebrauch, welcher ein Gehäuse (29) aufweist, das wenigstens eine C-Schiene enthält, wobei das Gehäuse Module elektrischer Komponenten (3-6) des Schaltkastens aufnimmt, wobei das Gehäuse eine Vorderwand (30) mit einem Sitz (31) zur Aufnahme eines Steuermoduls (28) aufweist, das angepasst ist, um die Funktionen des Schaltkastens anzuzeigen, wobei der Sitz (31) getrennt und beabstandet vom Bereich zur Aufnahme der Module (3-6) ist,
dadurch gekennzeichnet,
dass das Steuermodul (28) eine absorbierte Strommesseinrichtung (11) aufweist, die mit einem Stromsensor (11b) verbunden ist, welcher auf der Nullleitung stromabwärts eines residuellen Stromkreisunterbrechers (3) angeordnet ist und angepasst ist, um die Werte der absorbierten Ströme zu einem Mikrocontroller (14) zu schicken.

2. Schaltkasten nach Anspruch 1,
dadurch gekennzeichnet,
dass eine Klappe (32) an der Vorderwand (30) des Gehäuses angelenkt ist, um in geschlossener Position die Module elektrischer Komponenten abzudecken, wobei der Steuermodul (28) von außen sichtbar ist, wenn die Klappe (32) sich in der geschlossenen Position befindet.

3. Schaltkasten nach Anspruch 1,
dadurch gekennzeichnet,
dass die elektronischen Komponenten (3-6) Stromkreisunterbrecher sind.

4. Schaltkasten nach Anspruch 3,
dadurch gekennzeichnet,
dass die Stromkreisunterbrecher (3-6) residuelle Stromkreisunterbrecher (3) sind.

5. Schaltkasten nach Anspruch 3,
dadurch gekennzeichnet,
dass die Stromkreisunterbrecher (3-6) magnetothermische Stromkreisunterbrecher (4-6) sind.

6. Schaltkasten nach Anspruch 3,
dadurch gekennzeichnet,
dass die Stromkreisunterbrecher (3-6) Stromkreisunterbrecher zur Verbindung mit der Stromversorgungsleitung der elektrischen Stromversorgung sind.

7. Schaltkasten nach Anspruch 5,
dadurch gekennzeichnet,
dass das Steuermodul (28) einen magnetothermischen Schutzinterventionsblock (10) aufweist, der mit den Phasenleitungen (F) stromabwärts der magnetothermischen Stromkreisunterbrecher (4-6) verbunden ist und angepasst ist, um den Mikrocontroller (14) zu benachrichtigen, dass die magnetothermischen Stromkreisunterbrecher wirksam geworden sind.

8. Schaltkasten nach Anspruch 4,
dadurch gekennzeichnet,
dass der Steuermodul (28) einen residuellen Stromschutzinterventionsblock (9) aufweist, der mit der Phasenleitung (F) stromabwärts des residuellen Stromkreisunterbrechers (3) verbunden ist und angepasst ist, um den Mikrocontroller (14) zu benachrichtigen, dass der residuelle Stromkreisunterbrecher wirksam geworden ist.

9. Schaltkasten nach Anspruch 1,
dadurch gekennzeichnet,
dass das Steuermodul (28) eine Hauptspannungsmesseinrichtung (8) aufweist, die angepasst ist, um den Wert der Hauptspannung zum Mikrocontroller (14) zu schicken.

10. Schaltkasten nach einem oder mehreren der vorangehenden Ansprüche,
dadurch gekennzeichnet,
dass der Mikrocontroller (14) eine LED-Anzeige (20) antreibt, die angepasst ist, um die Intervention der Stromkreisunterbrecher anzuzeigen.

11. Schaltkasten nach einem oder mehreren der vorangehenden Ansprüche,
dadurch gekennzeichnet,
dass der Mikrocontroller (14) eine LED-Anzeige (19) antreibt, die angepasst ist, um den Mangel an Stromversorgung auf der Seite der elektrischen Strombereitstellung anzuzeigen.

12. Schaltkasten nach Anspruch 1,
dadurch gekennzeichnet,
dass der Mikrocontroller (14) eine LED-Anzeige (21) antreibt, die angepasst ist, um abnormale Situationen, wie Stromabsorptionen im Überschuss gegenüber einem vorbestimmten Wert anzuzeigen.

13. Schaltkasten nach Anspruch 12,
dadurch gekennzeichnet,
dass dieser einen Summer (17) zur akustischen Anzeige der abnormalen Situationen aufweist, wobei der Summer vom Mikrocontroller (14) angetrieben wird.

14. Schaltkasten nach Anspruch 1,
dadurch gekennzeichnet,
dass der Mikrocontroller (14) eine Flüssigkristallanzeige (16) antreibt, die angepasst ist, um verschiedene Parameter im Hinblick auf die Betätigung des Schaltkastens anzuzeigen.

15. Schaltkasten nach Anspruch 14,
dadurch gekennzeichnet,
dass die Anzeige (16) Korrekturhandlungen anzeigt, die der Nutzer ausführen muss.

16. Schaltkasten nach Anspruch 1,
dadurch gekennzeichnet,
dass der Mikrocontroller (14) von einer Backup-Batterie (27) mit Strom versorgt wird, wenn Strom von der elektrischen Stromversorgung entfällt.

17. Schaltkasten nach Anspruch 14,
dadurch gekennzeichnet,
dass der Mikrocontroller (14) mit einem Nutzerinterface (15) verbunden ist, um für jeden Parameter Schwellwerte zu setzen, um die auf der Anzeige angezeigte Information auszuwählen und um auf einen Alarm und abnormale Situationen zu reagieren.

## Revendications

1. Un boîtier principal d'alimentation en puissance électrique, particulièrement à usage domestique, qui comporte une enveloppe (29) qui contient au moins un rail en C, ladite enveloppe recevant des modules de composants électriques (3 à 6) dudit boîtier principal, ladite enveloppe comprenant un panneau frontal (30) présentant un siège (31) pour recevoir un module de contrôle (28) qui est apte à surveiller les fonctions dudit boîtier principal, ledit siège (31) étant séparé et espacé de la zone pour recevoir lesdits modules (3 à 6), caractérisé en ce que ledit module de contrôle (28) comporte un dispositif de mesure de courant absorbé (11) qui est relié à un capteur de courant (11b) qui est placé sur la ligne neutre à l'aval d'un disjoncteur de circuit (3) de courant résiduel et qui est apte à adresser les valeurs desdits courants absorbés à un microcontrôleur (14).

2. Le boîtier principal selon la revendication 1, caractérisé en ce qu'un volet (32) est articulé sur ledit panneau frontal (30) de l'enveloppe pour recouvrir, dans une position fermée, lesdits modules de composants électriques, ledit module de contrôle (28) étant visible extérieurement lorsque ledit volet (32) est en position fermée.

3. Le boîtier principal selon la revendication 1, caractérisé en ce que lesdits composants électriques (3 à 6) sont des disjoncteurs ou interrupteurs de circuit.

4. Le boîtier principal selon la revendication 3, caractérisé en ce que lesdits disjoncteurs de circuit (3 à 6) sont des disjoncteurs de circuit (3) pour le courant résiduel.

5. Le boîtier principal selon la revendication 3, caractérisé en ce que lesdits disjoncteurs de circuit (3 à 6) sont des disjoncteurs ou interrupteurs de circuit magnétothermiques (4 à 6).

6. Le boîtier principal selon la revendication 3, caractérisé en ce que lesdits disjoncteurs de circuit (3 à 6) sont des disjoncteurs de circuit pour la liaison vers le secteur du fournisseur de puissance électrique.

7. Le boîtier principal selon la revendication 5, caractérisé en ce que ledit module de contrôle (28) comporte un bloc d'intervention (10) de protection magnétothermique qui est connecté aux lignes de phase (F) à l'aval desdits disjoncteurs magnétothermiques de circuit (4 à 6) et qui est apte à notifier un microcontrôleur (14) que lesdits disjoncteurs magnétothermiques de circuit sont intervenus.

8. Le boîtier principal selon la revendication 4, caractérisé en ce que ledit module de contrôle (28) comporte un bloc d'intervention (9) de protection de courant résiduel qui est connecté à la ligne de phase (F) à l'aval dudit disjoncteur de circuit (3) pour le courant résiduel et qui est apte à notifier à un microcontrôleur (14) que ledit disjoncteur pour le courant résiduel est intervenu.

9. Le boîtier principal selon la revendication 1, caractérisé en ce que ledit module de contrôle (28) comporte un dispositif de mesure (8) de la tension aux bornes qui est apte à adresser au microcontrôleur (14) la valeur de la tension du secteur.

10. Le boîtier principal selon l'une ou plusieurs des revendications précédentes, caractérisé en ce que ledit microcontrôleur (14) pilote une diode électroluminescente LED (20) qui est apte à indiquer l'intervention desdits disjoncteurs de circuit.

11. Le boîtier principal selon l'une ou plusieurs des revendications précédentes, caractérisé en ce que ledit microcontrôleur (14) pilote une diode électroluminescente LED (19) qui est apte à indiquer la défaillance de la fourniture de puissance de la part du fournisseur de puissance électrique.

12. Le boîtier principal selon la revendication 1, caractérisé en ce que ledit microcontrôleur (14) pilote une diode électroluminescente LED (21) qui est apte à indiquer les situations anormales telles qu'une adsorption de puissance dépassant une valeur prédéterminée.

13. Le boîtier principal selon la revendication 12, caractérisé en ce qu'il comporte un vibreur (17) pour l'indication acoustique desdites situations anormales, ledit vibreur étant piloté par ledit microcontrôleur (14).

14. Le boîtier principal selon la revendication 1, caractérisé en ce que ledit microcontrôleur (14) pilote un affichage à cristaux liquides (16) qui est apte à afficher les divers paramètres concernant le fonctionnement du boîtier principal.

15. Le boîtier principal selon la revendication 14, caractérisé en ce que ledit affichage (16) affiche l'action corrective que l'utilisateur doit réaliser.

16. Le boîtier principal selon la revendication 1, caractérisé en ce que ledit microcontrôleur (14) est alimenté en puissance par une batterie de réserve (27) si l'alimentation en puissance du fournisseur de puissance électrique est défaillante.

17. Le boîtier principal selon la revendication 14, caractérisé en ce que ledit microcontrôleur (14) est connecté à une interface (15) d'utilisateur, qui fixe des valeurs de seuil pour chaque paramètre, pour sélectionner l'information présentée sur l'affichage et pour réagir à l'alarme et aux situations anormales.
